(19) Europäisches Patentamt / European Patent Office / Office européen des brevets

(11) **EP 2 514 647 B1**

(12) **FASCICULE DE BREVET EUROPEEN**

(45) Date de publication et mention
de la délivrance du brevet:
**31.05.2017 Bulletin 2017/22**

(21) Numéro de dépôt: **12163687.2**

(22) Date de dépôt: **11.04.2012**

(51) Int Cl.:
*B60T 8/17* (2006.01)     *B60T 8/171* (2006.01)
*B60T 8/172* (2006.01)     *B60T 8/32* (2006.01)
*B64C 25/42* (2006.01)

(54) **Procédé de contrôle de la décélération au sol d'un véhicule**

Kontrollverfahren der Bremswirkung am Boden eines Fahrzeugs

Method for controlling deceleration on the ground of a vehicle

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.04.2011 FR 1101219**

(43) Date de publication de la demande:
**24.10.2012 Bulletin 2012/43**

(73) Titulaire: **Airbus Operations**
**31060 Toulouse (FR)**

(72) Inventeurs:
• **Essadouni, Malika**
**31600 MURET (FR)**
• **Dal Santo, Xavier**
**44000 NANTES (FR)**

(74) Mandataire: **Santarelli**
**49, avenue des Champs-Elysées**
**75008 Paris (FR)**

(56) Documents cités:
FR-A1- 2 372 058    US-A- 3 920 282
US-A- 4 120 540    US-A1- 2006 186 267
US-A1- 2006 243 857    US-A1- 2007 222 285
US-A1- 2008 030 073    US-A1- 2008 154 445
US-A1- 2009 276 133    US-A1- 2009 292 433

**Description**

L'invention est relative à un procédé de contrôle de la décélération au sol d'un véhicule, plus particulièrement d'un aéronef tel qu'un avion.

Du fait de la congestion des aéroports et des coûts engendrés par l'utilisation des aires d'atterrissages, des efforts ont été produits afin de réduire le temps durant lequel ces infrastructures sont occupées par des avions.

De façon connue, la plupart des avions de transport sont équipés d'un système de freinage automatique qui réalise une décélération prédéfinie selon les besoins de l'équipage après le toucher des roues. Cette décélération permet notamment de faire aboutir l'avion à un point déterminé à une vitesse déterminée.

A cette fin, certains avions sont équipés d'un système automatique de freinage connu sous sa terminologie anglo-saxonne de « Brake to Vacate » (BTV). Ce système permet avantageusement d'adapter un profil de freinage en fonction des caractéristiques du point d'aboutissement, des conditions extérieures connues et d'autres paramètres renseignés par l'équipage.

Le système BTV élabore des profils de décélération selon un modèle dit « rampe-plateau », constitué, comme son nom l'indique, d'une décélération linéaire progressive depuis une valeur initiale nulle jusqu'à une valeur finale fixe, avec pour alternative possible un freinage fort, constant en cas de danger. Un autre modèle de décélération, dit « plateau-rampe », constitué d'une décélération linéaire dégressive depuis une valeur initiale fixe est également connu.

Cependant, la méthode utilisée par le système BTV ne permet pas toujours de trouver une solution au système d'équations à résoudre pour calculer la commande de décélération. Certaines conditions dynamiques, telles que la vitesse et la position de l'avion, sa masse ou la position du point d'aboutissement, peuvent avoir des valeurs telles que le système d'équations n'admette aucune solution.

La méthode de calcul actuelle est en effet fondée sur une estimation du temps de commutation de la rampe vers le plateau fixe. Or, lorsque la valeur choisie du plateau est trop élevée par rapport au besoin réel de freinage (déterminé par les conditions dynamiques pouvant varier selon la qualité de la piste, la vitesse du vent, etc.), le temps de commutation devient supérieur au temps de freinage et le profil calculé ne correspond plus à aucune solution physique. Ceci engendre en général une décélération trop forte, induisant un temps d'occupation de piste trop élevé.

On connait le document US 2008/154445 qui divulgue un procédé de contrôle de la décélération d'un aéronef en cas de décollage avorté. A partir de la position de l'aéronef et de la distance restante sur la piste d'atterrissage, la décélération permettant d'arrêter l'aéronef dans cette distance est calculée.

On connait également le document US 2008/030073, qui divulgue un procédé de détermination des conditions de freinage sur une piste d'atterrissage en fonction de l'aéronef mis en cause. Après freinage, une acquisition des données de freinage est faite, puis des performances de freinage sont calculées et une performance de freinage normalisée est déterminée. La présente invention propose donc de résoudre au moins un des problèmes exposés ci-dessus en adaptant de manière automatique les paramètres de freinage (on entend par « freinage » l'application maîtrisée d'une force contraire au sens d'avancement du véhicule et produisant une décélération) aux conditions dynamiques et aux perturbations.

L'invention a plus particulièrement pour objet un procédé de contrôle de la décélération au sol d'un véhicule, caractérisé en ce qu'il comprend les étapes suivantes :

- obtention d'une valeur présélectionnée de décélération ;
- obtention de paramètres dynamiques courants représentatifs de la position courante et de la vitesse courante du véhicule ;
- détermination, à partir desdits paramètres obtenus et de la valeur présélectionnée de décélération, d'une position et d'une vitesse de référence du véhicule, la position de référence étant une position théorique à atteindre par le véhicule;
- détermination, à partir desdits paramètres et desdites position et vitesse de référence, d'une commande de décélération en vue d'obtenir une position et une vitesse d'aboutissement du véhicule présélectionnées.

La commande de décélération dépend ainsi d'un profil de décélération établi à partir de la position et de la vitesse d'aboutissement présélectionnées.

La valeur présélectionnée de décélération correspond notamment, dans le cas d'un profil de type plateau-rampe ou rampe-plateau, à la valeur de la décélération du plateau.

La valeur présélectionnée de décélération étant nécessaire au calcul des valeurs de la position et de la vitesse de référence, cette étape d'obtention de la valeur présélectionnée de décélération intervient préalablement à l'obtention des paramètres dynamiques courants.

Dans le cadre d'un dispositif mettant en oeuvre le procédé objet de l'invention, la valeur présélectionnée de décélération peut être définie par l'équipage du véhicule, par un opérateur externe ou automatiquement (choix par défaut).

De manière avantageuse, la commande de décélération (on entend par « commande de décélération » la valeur de décélération que le procédé objet de l'invention communique à des moyens pouvant appliquer un freinage) ne fait plus appel au temps de commutation mais à certains paramètres de référence.

La position de référence correspond à une position théorique dont la valeur de la position courante du véhicule doit s'approcher, et idéalement qu'elle doit atteindre. La position de référence correspond plus précisément à la position à laquelle se trouverait le véhicule se déplaçant, d'une part, à la vitesse courante et, d'autre part, suivant une décélération pour laquelle le véhicule atteindrait la position d'aboutissement à la vitesse d'aboutissement présélectionnée. La position de référence dépend de façon générale des conditions de progression du véhicule.

Cette décélération dépend du type de profil de décélération choisi : s'il s'agit d'un profil rampe-plateau, elle correspond à la décélération maximale ; s'il s'agit d'un profil plateau-rampe, elle correspond à une décélération proche de zéro (valeur s). Si la position courante est différente de la position de référence, le profil est recalculé comme décrit plus loin.

La vitesse de référence correspond, quant à elle, à la vitesse qu'aurait le véhicule à sa position courante s'il se déplaçait suivant la décélération permettant d'atteindre le point d'aboutissement à la vitesse d'aboutissement présélectionnée.

Ces deux valeurs théoriques dépendent intrinsèquement de phénomènes pouvant influer sur la décélération du véhicule, tels que les conditions météorologiques, le relief du terrain, le revêtement au sol, etc., et permettent ainsi d'adapter le freinage.

Ainsi, l'invention propose une adaptation de la commande de décélération des paramètres de freinage s'effectuant en fonction de critères physiques et mathématiques, assurant une arrivée à un point cible (position ou point d'aboutissement) à la vitesse voulue, et ce en garantissant que le système d'équations à résoudre pour déterminer la commande de décélération présente une solution quelles que soient les conditions de freinage.

De plus, grâce à ce mode de calcul dynamique de la commande de décélération, les commandes additionnelles de freinage de sécurité deviennent plus facilement intégrables afin de former un système complet.

L'invention peut donc être utilisée pour réaliser une commande auto-adaptative avec des profils visant des points cibles d'arrivée et des vitesses de sécurité.

Afin de mieux s'adapter aux conditions environnementales dont certains exemples ont été cités ci-dessus, le procédé comprend l'exécution de manière itérative d'une succession d'au moins certaines des étapes précitées.

Par exemple, après exécution d'une succession des étapes précitées du dispositif (ou seulement de certaines d'entre elles), le procédé déclenche une nouvelle succession d'étapes au cours de laquelle, à la suite de l'étape de mise à jour de la commande de décélération, le procédé déclenche une nouvelle itération d'étapes démarrant à l'étape d'obtention des paramètres dynamiques courants.

Selon une caractéristique possible, la valeur de la position de référence du véhicule est déterminée en temps réel à partir de la vitesse courante du véhicule et de la valeur présélectionnée de décélération obtenue.

La position de référence du véhicule peut donc être définie comme la position à laquelle se trouverait le véhicule se déplaçant à la vitesse courante et suivant la décélération $nx_{LVL}$ pour laquelle il atteindrait le point d'aboutissement à la vitesse présélectionnée d'aboutissement.

Ainsi, dans le cas d'un profil plateau-rampe, la position théorique correspond à la position dans laquelle se trouverait le véhicule se déplaçant à sa vitesse courante, suivant la décélération présélectionnée obtenue au préalable.

Ce choix de calcul permet à la position de référence de jouer son rôle de position à atteindre.

Pour ce profil de décélération, la valeur de la position de référence $X_R$ est calculée selon la formule

$$X_R(V) = X(t_1) + \frac{2}{3}\frac{V(t_1) - V(t_0)}{g.nx_{SEL}}\left[\sqrt{\frac{V - V(t_0)}{V(t_1) - V(t_0)}}(V + 2.V(t_0)) - (V(t_1) + 2.V(t_0))\right],$$

où V est la vitesse courante (on confond ici V et V(t), V dépendant implicitement de l'instant considéré), $t_0$ est le moment d'activation du dispositif, $t_1$ le moment de fin de décélération, g la constante de gravitation universelle, et $nx_{SEL}$ la valeur de décélération présélectionnée.

Dans le cas d'un profil rampe-plateau, le profil débutant à la décélération présélectionnée, la position de référence correspond à la position dans laquelle se trouverait le véhicule se déplaçant à sa vitesse courante, avec une décélération quasi-nulle.

Pour ce profil de décélération, la valeur de la position de référence est calculée selon la formule

$$\begin{cases} X_R(V) = X(t_1) - \dfrac{(V(t_1) - V(t_0))^2}{g.nx_{SEL}} \left[ \dfrac{(4.V(t_1) + 2.V(t_0))}{3.(V(t_1) - V(t_0))} - \dfrac{2.V(t_0)}{V(t_1) - V(t_0)}\beta - 2\beta^2 + \dfrac{2}{3}\beta^3 \right] \\ \beta = 1 - \sqrt{\dfrac{V - V(t_1)}{V(t_0) - V(t_1)}} \end{cases}$$ ,

Le procédé peut comprendre en outre une étape initiale de présélection de paramètres de contrôle de la décélération.

Dans le cadre d'un dispositif mettant en oeuvre le procédé objet de l'invention, ces paramètres de contrôles sont renseignés par l'équipage du véhicule, par un opérateur externe ou automatiquement (choix par défaut).

Selon une caractéristique possible, ces paramètres de contrôle de la décélération comprennent la position d'aboutissement du véhicule, la vitesse du véhicule à l'arrivée à cette position d'aboutissement (vitesse présélectionnée d'aboutissement), un type de profil de décélération du véhicule et la valeur présélectionnée de décélération.

Au moins certaines des valeurs de la position de référence du véhicule, de la vitesse de référence du véhicule et de la valeur présélectionnée de décélération peuvent être mises à jour de manière interdépendante au cours d'une même itération de la succession d'au moins certaines des étapes précitées.

Notamment, une mise à jour de la valeur présélectionnée de décélération peut être effectuée au cours d'une itération lorsque certaines conditions ou perturbations sont rencontrées.

Ceci permet d'optimiser la robustesse de la loi de freinage vis-à-vis des éventuelles perturbations qui augmenteraient ou se substitueraient à sa commande de décélération.

La valeur de la vitesse de référence est déterminée en temps réel à partir de la position courante du véhicule et de la valeur présélectionnée de décélération.

La vitesse de référence correspond à la vitesse qu'aurait le véhicule à sa position courante s'il se déplaçait suivant la décélération $nx_{LVL}$ pour laquelle le véhicule atteindrait le point d'aboutissement à la vitesse présélectionnée d'aboutissement. Ce paramètre $nx_{LVL}$ permet de conserver une même formule que le profil de décélération soit de type rampe-plateau ou plateau-rampe.

La valeur de la vitesse de référence est calculée selon la formule

$$V_R = -g.nx_{LVL}.T.\left( \sqrt{1 - \dfrac{2(X_{STOP} - X)}{g.nx_{LVL}.T^2}} - 1 \right)$$ ,

où les paramètres $X_{STOP}$ et $T$ sont définis par les formules

$$X_{STOP} = X_{EXIT} - \dfrac{V_{EXIT}^2}{2gnx_{LVL}} \text{ et } X_{STOP} = X + T.V - \dfrac{V^2}{2.g.nx_{LVL}},$$

$X_{EXIT}$ étant la valeur de la position d'aboutissement et $V_{EXIT}$ la vitesse désirée (présélectionnée) à cette position (vitesse présélectionnée d'aboutissement).

Dans le cas particulier où le véhicule est un aéronef et où la loi de décélération est utilisée pour prévenir un dépassement du bout de piste, $X_{STOP} = L$ où $L$ est la longueur de la piste.

Ainsi, dans le cas d'un profil rampe-plateau, la valeur de $nx_{LVL}$ correspond à la valeur de la décélération maximale. La vitesse de référence du véhicule peut donc être définie comme la vitesse théorique qu'aurait le véhicule à sa position courante s'il se déplaçait suivant la décélération maximale obtenue précédemment. Dans ce cas, à tout moment la vitesse courante est inférieure à la vitesse de référence. Ce choix de calcul est cohérent par rapport à la définition de la position de référence.

Dans le cas d'un profil plateau-rampe, la valeur de $nx_{LVL}$ est fixée comme étant très faible. Dans ce cas, à tout moment la vitesse courante est supérieure à la vitesse de référence.

Le procédé peut comprendre en outre une étape de mise à jour, au cours de la même itération, de la valeur présélectionnée de décélération, l'étape de mise à jour intervenant entre l'étape de détermination de la position de référence et l'étape de détermination de la vitesse de référence.

Cette étape de mise à jour s'effectue notamment dans le cas où les perturbations extérieures ont globalement contribué à ce que le freinage soit plus efficace que prévu. Elle revient à diminuer la valeur présélectionnée de décélération de manière à éviter que le freinage ne prenne fin avant la position ou point d'aboutissement, ce qui reviendrait à occuper trop de temps de piste dans le cas du roulage d'un avion sur une piste d'atterrissage.

Le procédé peut comprendre en outre une étape de détermination de l'écart entre la vitesse courante du véhicule et la vitesse de référence du véhicule et/ou une étape de détermination de l'écart entre la position courante du véhicule et la position de référence du véhicule.

La mise à jour de la valeur présélectionnée de décélération est alors effectuée à partir de la détermination de l'écart entre la vitesse courante du véhicule et la vitesse de référence du véhicule et/ou de l'écart entre la position courante et la position de référence.

En particulier, la mise à jour de la valeur présélectionnée décélération est effectuée en la diminuant proportionnellement selon l'écart entre la position courante du véhicule et la position de référence du véhicule.

En cas de détection d'un dépassement de la position d'aboutissement par le véhicule, le procédé peut comprendre en outre une étape de changement du profil de décélération du véhicule. La valeur présélectionnée de décélération se met à jour jusqu'à commander la décélération maximum si besoin.

Cette détection s'opère notamment si la valeur de la position courante du véhicule excède celle de la position d'aboutissement de plus d'un seuil de sécurité prédéfini, ou bien si cette valeur dépasse le bout de piste si le véhicule considéré est un aéronef.

Selon une caractéristique, le profil de décélération est de type « rampe-plateau » ou « plateau-rampe », qui sont les profils utilisés couramment dans le cadre de l'atterrissage d'un avion.

L'invention a également pour objet un dispositif de contrôle de la décélération au sol d'un véhicule, caractérisé en ce qu'il comprend :

- des moyens d'obtention de paramètres dynamiques courants représentatifs de la position courante et de la vitesse courante du véhicule ;
- des moyens de détermination, à partir desdits paramètres obtenus, d'une position et d'une vitesse de référence du véhicule, la position de référence étant une position théorique à atteindre par le véhicule ;
- des moyens de détermination à partir desdits paramètres et desdites position et vitesse de référence, d'une commande de décélération en vue d'obtenir une position et une vitesse d'aboutissement du véhicule présélectionnées.

Ce dispositif comprend en outre des moyens de réception de paramètres de contrôle de la décélération.

Ainsi les paramètres de contrôle de la décélération peuvent être renseignés par l'équipage du véhicule, par un opérateur externe ou par défaut.

Le dispositif peut comprendre en outre des moyens d'affichage d'au moins certains des résultats déterminés par les moyens de détermination précités, à savoir la position et la vitesse de référence et la commande de décélération.

De cette façon, l'équipage ou un opérateur extérieur sont renseignés à chaque itération de ces valeurs.

Le dispositif peut comprendre en outre des moyens d'obtention d'une estimation de la position où le véhicule atteindra la vitesse d'aboutissement présélectionnée.

En effet, cette position peut être différente de la position d'aboutissement suite à l'apparition d'un évènement imprévu modifiant la progression du véhicule.

Cette estimation permet à l'équipage ou à un opérateur extérieur de constater des effets des conditions extérieures sur le freinage et d'anticiper un éventuel retard dans la progression du véhicule ou un danger.

L'invention concerne également un aéronef comprenant au moins un dispositif selon l'invention.

D'autres caractéristiques et avantages apparaitront au cours de la description qui va suivre, donnée à titre d'exemple non limitatif et faite en référence aux dessins annexés, sur lesquels

- la figure 1 est une représentation schématique d'un avion sur une piste d'atterrissage illustrant des paramètres représentatifs de différentes positions d'un avion à l'atterrissage ;
- la figure 2 est un schéma par blocs illustrant les relations entre les différents éléments d'un dispositif mettant en oeuvre le procédé selon l'invention ;
- la figure 3 est un organigramme représentant l'organisation des étapes de l'algorithme suivi par le procédé suivant l'invention.

Le procédé objet de l'invention permet de déterminer, en temps réel simplement, précisément, et de manière à s'adapter automatiquement à des évènements imprévus, la valeur d'une commande de décélération à appliquer à un véhicule afin que celui parvienne à une position donnée avec une vitesse donnée (position et vitesse d'aboutissement).

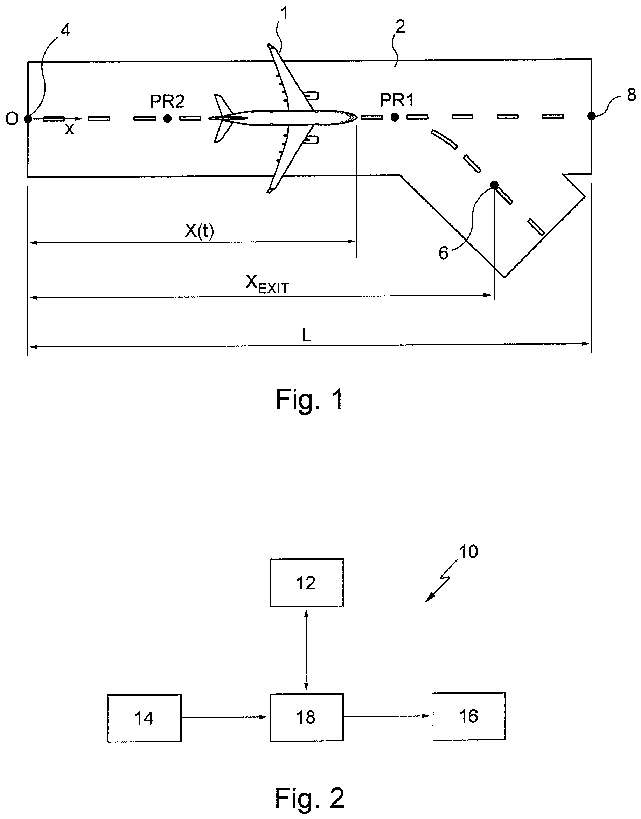

En référence à la figure 1, le procédé objet de l'invention permet de faire aboutir un véhicule 1, en l'occurrence un avion circulant sur une piste d'atterrissage 2 de longueur L, à partir de son point de départ, qui pour l'avion 1 correspond au point de toucher des roues 4, en un point déterminé appelé « point d'aboutissement », ici le point de sortie de piste 6, à une vitesse déterminée au préalable.

De façon avantageuse, le procédé fournit une décélération progressive et linéaire, d'une valeur initiale nulle jusqu'à une valeur finale si possible fixe (profil « rampe-plateau » déjà évoqué ci-dessus).

Alternativement, cette décélération est dégressive et linéaire, depuis une valeur initiale, si possible fixe, à une valeur finale très faible (profil « plateau-rampe »).

Le procédé permet également de faire en sorte que la décélération s'accomplisse dans un contexte de sécurité, et ce, en intégrant facilement des commandes de freinage supplémentaires si un danger est détecté, tel qu'un risque avéré de dépassement d'un point au-delà duquel l'intégrité du véhicule sera menacée.

Dans le cas de l'avion 1 de la figure 1, ce point peut correspondre au point de fin de piste 8 de la piste 2.

Dans un mode préféré de réalisation, un dispositif 10 mettant en oeuvre le procédé conforme à l'invention est embarqué à bord du véhicule 1. Le dispositif 10 comporte des moyens d'interface 12 avec un opérateur (par exemple à l'aide d'un écran, d'un clavier, d'un écran tactile, ...), des moyens d'acquisition de paramètres dynamiques courants 14, des moyens d'application de freinage 16, et un calculateur 18.

Les relations entre ces différents éléments sont illustrées sur la figure 2.

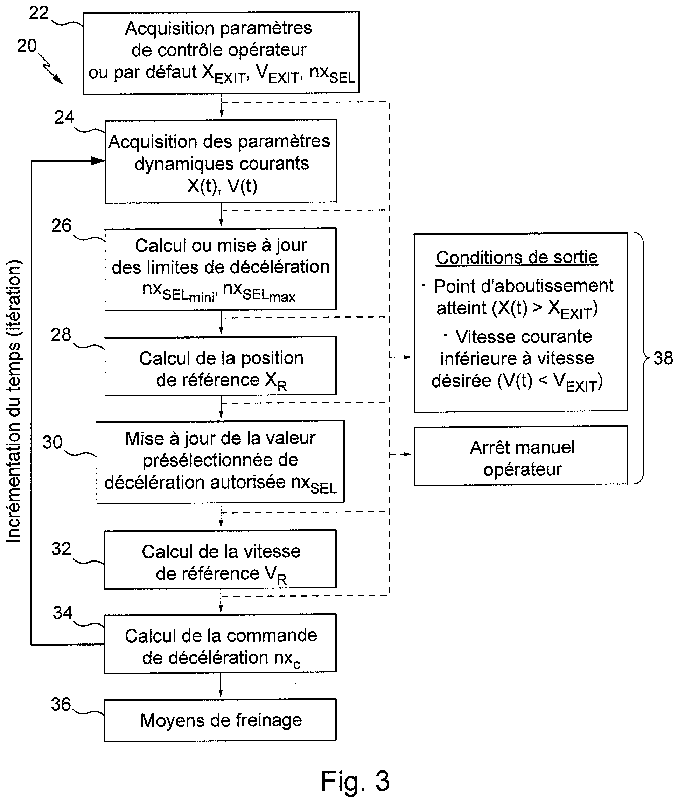

Les moyens d'interface 12 avec l'opérateur communiquent en temps réel au calculateur 18 certains paramètres pouvant être renseignés par l'opérateur, en particulier la position ou point d'aboutissement noté $X_{EXIT}$ sur la figure 1, la vitesse d'arrivée à ce point d'aboutissement, le type de profil de décélération et la valeur présélectionnée de décélération. Ces moyens d'interface peuvent également comprendre des moyens d'affichage d'au moins certains résultats obtenus au cours de l'exécution de l'algorithme de la Figure 3.

Les moyens d'acquisition de paramètres dynamiques courants 14 sont aptes à mesurer directement via des capteurs ou à estimer à travers d'autres mesures la vitesse courante et la position courante V(t) du véhicule notée X(t) sur la figure 1. Ces moyens communiquent en temps réel les valeurs de ces paramètres au calculateur 18.

Après obtention des paramètres renseignés par les moyens d'interface 12 et des paramètres dynamiques courants fournis par les moyens d'acquisition 14, le calculateur 18 exécute l'algorithme 20 illustré à la figure 3 et décrit plus loin.

Au terme de l'algorithme, le calculateur 18 communique aux moyens d'application de freinage 16 une commande d'accélération calculée, ceci afin de mettre en oeuvre le freinage ainsi adapté.

Le calculateur 18 communique également aux moyens ou système d'interface 12 une estimation du point et de la vitesse de fin de décélération comme on le verra plus loin.

La figure 3 illustre de façon détaillée les étapes du procédé selon l'invention (l'algorithme 20).

L'étape initiale 22 est effectuée avant le toucher des roues.

Au cours de l'étape initiale 22, le calculateur acquiert grâce aux moyens d'interface 12 les paramètres fournis par l'opérateur avant le début du freinage (paramètres de contrôle de la décélération).

A cet égard, on notera que les moyens d'interface peuvent comporter des moyens de réception de tels paramètres, par exemple en provenance de l'extérieur de l'aéronef (ex : aéroport). La réception peut par exemple être effectuée via un moyen de communication radio ou satellite.

Dans le cas d'un avion, l'opérateur peut être l'équipage ou un opérateur extérieur au véhicule, par exemple un contrôleur aérien.

Dans un mode préféré de réalisation, ces paramètres comprennent au moins la position ou point d'aboutissement $X_{EXIT}$ et la vitesse présélectionnée $V_{EXIT}$ à la fin du freinage (à la position $V_{EXIT}$), ainsi que la sélection du type de profil de freinage parmi au moins deux possibilités, à savoir rampe-plateau ou plateau-rampe.

L'opérateur peut également choisir de communiquer ou non au dispositif la valeur présélectionnée de décélération $nx_{SEL}$.

Dans ce dernier cas, l'algorithme en calcule une valeur par défaut, optimisée à partir des autres paramètres.

Une fois l'étape initiale 22 réalisée, le déclenchement du procédé selon l'invention s'effectue soit manuellement par l'opérateur, soit automatiquement par détection du toucher des roues.

L'étape d'acquisition des paramètres dynamiques 24 est ensuite effectuée. Au cours de cette étape l'algorithme 20 acquiert, grâce aux moyens d'acquisition de paramètres dynamiques courants 14, les valeurs de la position X(t) et de la vitesse courante V(t) du véhicule 1 à l'instant considéré.

Puis, au cours de l'étape 26 de mise à jour ou de calcul des valeurs limites de décélération, les limites de décélération minimale $nx_{SELmini}$ et maximale $nx_{SELmax}$ sont obtenues (par exemple à partir de valeurs stockées en mémoire). Ces limites servent notamment à moduler la valeur présélectionnée de décélération

En particulier, la valeur limite de décélération maximale est a priori différente de la valeur maximale de décélération $nx_{LVL}$ dans le cas d'un profil rampe-plateau. Ces valeurs peuvent être égales dans des conditions particulières exposées plus loin.

En particulier, ces valeurs peuvent être calculées à l'aide des formules suivantes. Pour un profil de type rampe-plateau, ces formules sont :

$$nx_{SEL\,mini} = \frac{V^2(t_1) - V^2(t_0)}{2.g.(X(t_1) - X(t_0))} \text{ et } nx_{SEL\,max} = \frac{2}{3g}\frac{(V(t_1) - V(t_0))(V(t_1) + 2.V(t_0))}{X(t_1) - X(t_0)}$$

et

pour un profil de type plateau-rampe :

$$nx_{SEL\,max} = \frac{2}{3g}\frac{(V(t_1) - V(t_0))(2.V(t_1) + V(t_0))}{X(t_1) - X(t_0)}$$

où V est la vitesse courante (on confond ici V et V(t), V dépendant implicitement de l'instant considéré), $t_0$ est le moment d'activation du dispositif, $t_1$ le moment de fin de décélération, g la constante de gravitation universelle.

Dans le cas d'un profil « rampe-plateau », si la valeur présélectionnée de décélération a été préalablement renseignée par l'opérateur au cours de l'étape 22, l'algorithme 20 veille à ce qu'elle soit dans les limites calculées. Dans le cas contraire, cette valeur est modifiée et fixée à la valeur autorisée la plus proche.

Si la valeur présélectionnée de décélération $nx_{SEL}$ n'a pas été renseignée au cours de l'étape 22, elle est fixée de manière optimale à la valeur limite de décélération maximale $nx_{SELmax}$

Dans le cas d'un profil « plateau-rampe », la valeur de décélération au cours du plateau peut être choisie de deux manières : soit imposée par l'opérateur à une valeur donnée, et en ce cas il est nécessaire qu'il renseigne une condition selon laquelle le début de la rampe s'opère (par exemple à partir d'une certaine vitesse ou position du véhicule), soit calculée automatiquement.

Au cours de l'étape suivante 28, une position de référence $X_R$ est calculée en temps réel par exemple en fonction de la vitesse courante selon la formule suivante (où $nx_{SEL}$ est la valeur de décélération présélectionnée).

$$X_R(V) = X(t_1) + \frac{2}{3}\frac{V(t_1) - V(t_0)}{g.nx_{SEL}}\left[\sqrt{\frac{V - V(t_0)}{V(t_1) - V(t_0)}}(V + 2.V(t_0)) - \left(V(t_1) + 2.V(t_0)\right)\right]$$

dans le cas d'un profil rampe-plateau et selon la formule

$$\begin{cases} X_R(V) = X(t_1) - \frac{(V(t_1) - V(t_0))^2}{g.nx_{SEL}}\left[\frac{(4.V(t_1) + 2.V(t_0))}{3.(V(t_1) - V(t_0))} - \frac{2.V(t_0)}{V(t_1) - V(t_0)}\beta - 2\beta^2 + \frac{2}{3}\beta^3\right] \\ \beta = 1 - \sqrt{\frac{V - V(t_1)}{V(t_0) - V(t_1)}} \end{cases}$$

dans le cas d'un profil plateau-rampe.

De façon avantageuse, la valeur de la position de référence du véhicule est calculée en temps réel à partir de la vitesse courante du véhicule et de la valeur de la commande maximale de décélération autorisée à l'étape précédente.

Tant que le véhicule se trouve avant cette position de référence (notée PR1 sur la figure 1), le profil de décélération reste valable.

Si la valeur de la position courante de l'avion est supérieure à la valeur de la position de référence (position PR2 sur la figure 1), par exemple dans le cas où des perturbations extérieures (état de la piste, des pneus du véhicule...) ont contribué à freiner plus efficacement que prévu, cela signifie que le profil envisagé n'est plus adapté, ce qui déclenche l'étape 30 suivante.

L'étape 30 est une étape de mise à jour de la valeur présélectionnée de décélération maximale $nx_{SEL}$. Au cours de cette étape, l'écart entre la position courante du véhicule et la position de référence (alternativement entre la vitesse courante du véhicule et la vitesse de référence) est déterminé.

Cette étape 30 n'intervient que lorsque le profil de décélération n'est plus valable.

Ainsi, si nécessaire, la valeur présélectionnée de la décélération est mise à jour en la diminuant de façon proportionnelle à l'écart constaté entre la position courante du véhicule 1 et la position de référence.

Une fois la valeur présélectionnée de décélération mise à jour, la vitesse de référence $V_R$ est calculée au cours de l'étape 32. Cette vitesse est égale à celle que le véhicule 1 doit avoir pour arriver au point d'aboutissement à la vitesse présélectionnée en suivant la valeur présélectionnée de décélération.

On notera que lorsque le profil de décélération n'est pas modifié l'algorithme prévoit de passer directement de l'étape 28 à l'étape 32 sans effectuer de mise à jour.

De façon avantageuse, la valeur de la vitesse de référence du véhicule 1 est calculée en temps réel à partir de la position courante du véhicule et de la valeur présélectionnée de décélération de l'étape précédente.

Ainsi, comme exposé ci-dessus, les valeurs de la position de référence de véhicule, de la vitesse de référence du véhicule et de la décélération maximale sont mises à jour de manière interdépendante.

Le calcul de la commande de freinage $nx_c$ s'effectue au cours de l'étape 34 en appliquant la formule suivante

$$nx_C(t) = nx(t_a) + (nx_{LVL} - nx(t_a))(1 - \sqrt{\frac{\Delta V(t)}{\Delta V(t_a)}})$$

afin de réaliser un freinage correspondant au profil sélectionné, où $t_a$ est le temps de commutation du profil de décélération, $nx(t_a)$ la décélération courante à l'instant $t_a$ et où $nx_{LVL}$ est la décélération pour laquelle le véhicule atteindrait le point d'aboutissement à la vitesse d'aboutissement présélectionnée.

Ce calcul est basé sur la comparaison entre la vitesse courante du véhicule 1 et la vitesse de référence, c'est-à-dire qu'il prend en compte la différence $\Delta V(t)$ entre la vitesse de référence $V_R$ et la vitesse courante V. Cette différence est calculée selon la formule suivante (pour un instant t=t*) :

$$\Delta V(t^*) = \Delta V(t_a) + g.(nx_{LVL} - nx(t_a)).(t^* - t_a) + \frac{g^2(nx_{LVL} - nx(t_a))^2}{4.\Delta V(t_a)}(t^* - t_a)^2 \quad ,$$

Cette valeur $nx_c$ est ensuite transmise aux moyens d'application de freinage 16 pour la mise en oeuvre du freinage adapté à l'étape 36.

Une fois l'étape 34 réalisée, l'algorithme retourne à l'étape 24 pour réaliser le calcul de la commande de décélération à l'instant suivant.

A tout moment, le calculateur 18 communique aux moyens d'interface avec l'opérateur 12 les paramètres utiles à l'opérateur, choisis parmi ceux calculés au cours de l'exécution de l'algorithme présenté ci-dessus.

En outre, il communique une estimation du point où l'avion atteindra la vitesse présélectionnée selon l'un des deux cas suivants :

- Si la vitesse courante du véhicule est inférieure à la vitesse de référence, cette estimation est égale à la valeur de la position ou point d'aboutissement.
- Si la vitesse courante du véhicule dépasse la vitesse de référence, cette estimation est calculée selon la formule

$$X_s(t) = X(t) + \frac{(V^2(t) - V_{exit}^2(t))}{2 \times 9,81 \times |n_x(t)|}$$ où $X_s(t)$ est la valeur de l'estimation de la position ou point d'aboutissement, X(t) est la position courante du véhicule, $V_{EXIT}(t)$ est la vitesse présélectionnée par l'opérateur (vitesse d'aboutissement) et $n_x(t)$ est la décélération courante de l'avion, exprimée en multiples de la constante de gravitation universelle g.

A partir de la valeur de cette estimation, un éventuel danger de dépasser le point d'aboutissement, ou un point au-delà duquel l'intégrité du véhicule est mise en cause, peut être détecté.

Dans ce cas, le type de profil de décélération peut être automatiquement modifié. Par exemple, dans le cas où le profil sélectionné au préalable est de type « rampe-plateau », il peut être modifié en profil de type « plateau-rampe ».

A tout moment, l'algorithme 20 peut être interrompu par l'opérateur à travers les moyens d'interface 12 par l'entrée de commandes appropriées.

Alternativement, il peut être interrompu lorsque les conditions terminales 38 sont remplies. Ces conditions terminales incluent notamment l'arrivée du véhicule au point d'aboutissement $X_{EXIT}$ ou une vitesse courante du véhicule inférieure à la vitesse prédéfinie d'aboutissement $V_{EXIT}$. Lorsque les conditions terminales sont remplies, le véhicule ayant atteint son point d'aboutissement et sa vitesse désirée, la décélération commandée devient nulle et le véhicule doit être repris en main par le pilote s'il s'agit d'un aéronef.

**Revendications**

1. Procédé de contrôle de la décélération au sol d'un véhicule, **caractérisé en ce qu'**il comprend les étapes suivantes :

   - obtention (22) d'une valeur présélectionnée de décélération ;
   - obtention (24) de paramètres dynamiques courants représentatifs de la position courante et de la vitesse courante du véhicule ;
   - détermination (28, 32), à partir desdits paramètres obtenus et de la valeur présélectionnée de décélaration, d'une position et d'une vitesse de référence du véhicule, la position de référence étant une position théorique à atteindre par le véhicule ;
   - détermination (34), à partir desdits paramètres et desdites position et vitesse de référence, d'une commande de décélération en vue d'obtenir une position et une vitesse d'aboutissement du véhicule présélectionnées.

2. Procédé selon la revendication 1, **caractérisé en ce qu'**il comprend l'exécution de manière itérative d'une succession d'au moins certaines des étapes précitées.

3. Procédé selon la revendication 2, **caractérisé en ce qu'**au moins certaines des valeurs de la position de référence du véhicule, de la vitesse de référence du véhicule et de la valeur présélectionnée de décélération sont mises à jour de manière interdépendante au cours d'une même itération de la succession d'au moins certaines des étapes précitées.

4. Procédé selon la revendication 1, **caractérisé en ce que** la valeur de la position de référence du véhicule est déterminée en temps réel à partir de la vitesse courante du véhicule et de la valeur présélectionnée de décélération obtenue.

5. Procédé selon l'une des revendications 1 à 4, **caractérisé en ce que** la valeur de la vitesse de référence est déterminée en temps réel à partir de la position courante du véhicule et de la valeur présélectionnée de décélération.

6. Procédé selon l'une quelconque des revendications 1 à 5, **caractérisé en ce qu'**il comprend une étape de mise à jour (30), au cours de la même itération, de la valeur présélectionnée de décélération, l'étape de mise à jour intervenant entre l'étape de détermination de la position de référence (28) et l'étape de détermination de la vitesse de référence (32).

7. Procédé selon les revendications 1 à 6, **caractérisé en ce qu'**il comprend une étape de détermination de l'écart entre la vitesse courante du véhicule et la vitesse de référence du véhicule et/ou une étape de détermination de l'écart entre la position courante du véhicule et la position de référence du véhicule.

8. Procédé selon les revendications 6 et 7, **caractérisé en ce que** la mise à jour de la valeur présélectionnée de décélération est effectuée à partir de la détermination de l'écart entre la vitesse courante du véhicule et la vitesse de référence du véhicule ou de l'écart entre la position courante du véhicule et la position de référence du véhicule.

9. Procédé selon l'une des revendications 1 à 8, **caractérisé en ce qu'**en cas de détection d'un dépassement de la position d'aboutissement par le véhicule, le procédé comprend en outre une étape de changement de profil de décélération du véhicule.

10. Procédé selon la revendication 9, **caractérisé en ce que** le profil de décélération est de type « rampe-plateau » ou « plateau-rampe ».

11. Procédé selon l'une des revendications 1 à 10, **caractérisé en ce qu'**il comprend une étape initiale de présélection de paramètres de contrôle de la décélération.

12. Dispositif de contrôle de la décélération au sol d'un véhicule, **caractérisé en ce qu'**il comprend :

    - des moyens d'obtention (12) d'une valeur présélectionnée de décélération ;
    - des moyens d'obtention (14) de paramètres dynamiques courants représentatifs de la position courante et de la vitesse courante du véhicule ;
    - des moyens de détermination (18), à partir desdits paramètres obtenus et de la valeur présélectionnée de décélération, d'une position et d'une vitesse de référence du véhicule, la position de référence étant une position théorique à atteindre par le véhicule ;
- des moyens de détermination à partir desdits paramètres et desdites position et vitesse de référence, d'une commande de décélération en vue d'obtenir une position et une vitesse d'aboutissement du véhicule présélectionnées.

13. Dispositif selon la revendication 12, **caractérisé en ce qu'**il comprend des moyens d'obtention d'une estimation de la position où le véhicule atteindra la vitesse d'aboutissement présélectionnée.

14. Aéronef comprenant au moins un dispositif selon l'une des revendications 12 à 13.

**Patentansprüche**

1. Verfahren zur Steuerung der Verzögerung eines Fahrzeugs am Boden, **dadurch gekennzeichnet, dass** es die folgenden Schritte umfasst:

   - Gewinnung (22) eines vorgewählten Verzögerungswertes;
   - Gewinnung (24) aktueller dynamischer Parameter, die für die aktuelle Position und die aktuelle Geschwindigkeit des Fahrzeugs repräsentativ sind;
   - Bestimmung (28, 32), aus den gewonnenen Parametern und dem vorgewählten Verzögerungswert, einer Referenzposition und einer Referenzgeschwindigkeit des Fahrzeugs, wobei die Referenzposition eine theoretische Position ist, die von dem Fahrzeug zu erreichen ist;
   - Bestimmung (34), aus den Parametern und der Referenzposition und -geschwindigkeit, einer Verzögerungssteuerung zum Erzielen einer vorgewählten Endposition und einer vorgewählten Endgeschwindigkeit des Fahrzeugs.

2. Verfahren nach Anspruch 1, **dadurch gekennzeichnet, dass** es die Ausführung einer Folge wenigstens einiger der oben genannten Schritte in iterativer Weise umfasst.

3. Verfahren nach Anspruch 2, **dadurch gekennzeichnet, dass** wenigstens einige der Werte der Referenzposition des Fahrzeugs, der Referenzgeschwindigkeit des Fahrzeugs und des vorgewählten Verzögerungswertes im Verlaufe ein und derselben Iteration der Folge wenigstens einiger der oben genannten Schritte auf unabhängige Weise aktualisiert werden.

4. Verfahren nach Anspruch 1, **dadurch gekennzeichnet, dass** der Wert der Referenzposition des Fahrzeugs in Echtzeit aus der aktuellen Geschwindigkeit des Fahrzeugs und dem gewonnenen vorgewählten Verzögerungswert bestimmt wird.

5. Verfahren nach einem der Ansprüche 1 bis 4, **dadurch gekennzeichnet, dass** der Wert der Referenzgeschwindigkeit in Echtzeit aus der aktuellen Position des Fahrzeugs und dem gewonnenen vorgewählten Verzögerungswert bestimmt wird.

6. Verfahren nach einem der Ansprüche 1 bis 5, **dadurch gekennzeichnet, dass** es einen Schritt der Aktualisierung (30) des vorgewählten Verzögerungswertes im Verlaufe ein und derselben Iteration umfasst, wobei der Schritt der Aktualisierung zwischen dem Schritt der Bestimmung der Referenzposition (28) und dem Schritt der Bestimmung der Referenzgeschwindigkeit (32) ausgeführt wird.

7. Verfahren nach einem der Ansprüche 1 bis 6, **dadurch gekennzeichnet, dass** es einen Schritt der Bestimmung der Abweichung zwischen der aktuellen Geschwindigkeit des Fahrzeugs und der Referenzgeschwindigkeit des Fahrzeugs und/oder einen Schritt der Bestimmung der Abweichung zwischen der aktuellen Position des Fahrzeugs und der Referenzposition des Fahrzeugs umfasst.

8. Verfahren nach einem der Ansprüche 6 und 7, **dadurch gekennzeichnet, dass** die Aktualisierung des vorgewählten Verzögerungswertes ausgehend von der Bestimmung der Abweichung zwischen der aktuellen Geschwindigkeit des Fahrzeugs und der Referenzgeschwindigkeit des Fahrzeugs oder der Abweichung zwischen der aktuellen Position des Fahrzeugs und der Referenzposition des Fahrzeugs durchgeführt wird.

9. Verfahren nach einem der Ansprüche 1 bis 8, **dadurch gekennzeichnet, dass** im Fall einer Erkennung eines Überfahrens der Endposition durch das Fahrzeug das Verfahren außerdem einen Schritt der Änderung des Verzögerungsprofils des Fahrzeugs umfasst.

**10.** Verfahren nach Anspruch 9, **dadurch gekennzeichnet, dass** das Verzögerungsprofil vom Typ "Rampe-Plateau" oder "Plateau-Rampe" ist.

**11.** Verfahren nach einem der Ansprüche 1 bis 10, **dadurch gekennzeichnet, dass** es einen Anfangsschritt der Vorauswahl von Steuerungsparametern der Verzögerung umfasst.

**12.** Vorrichtung zur Steuerung der Verzögerung eines Fahrzeugs am Boden, **dadurch gekennzeichnet, dass** sie umfasst:

- Mittel zur Gewinnung (12) eines vorgewählten Verzögerungswertes;
- Mittel zur Gewinnung (14) aktueller dynamischer Parameter, die für die aktuelle Position und die aktuelle Geschwindigkeit des Fahrzeugs repräsentativ sind;
- Mittel zur Bestimmung (18), aus den gewonnenen Parametern und dem vorgewählten Verzögerungswert, einer Referenzposition und einer Referenzgeschwindigkeit des Fahrzeugs, wobei die Referenzposition eine theoretische Position ist, die von dem Fahrzeug zu erreichen ist;
- Mittel zur Bestimmung, aus den Parametern und der Referenzposition und -geschwindigkeit, einer Verzögerungssteuerung zum Erzielen einer vorgewählten Endposition und einer vorgewählten Endgeschwindigkeit des Fahrzeugs.

**13.** Vorrichtung nach Anspruch 12, **dadurch gekennzeichnet, dass** sie Mittel zur Gewinnung einer Schätzung der Position umfasst, wo das Fahrzeug die vorgewählte Endgeschwindigkeit erreichen wird.

**14.** Luftfahrzeug, welches wenigstens eine Vorrichtung nach einem der Ansprüche 12 bis 13 umfasst.

**Claims**

**1.** A method for controlling deceleration of a vehicle on the ground, wherein it comprises the following steps:

- obtaining (22) a preselected deceleration value;
- obtaining (24) current dynamic parameters representative of the current position and the current speed of the vehicle;
- determining (28, 32), from said obtained parameters and from the preselected deceleration value, a reference position and speed of the vehicle, the reference position being a theoretical position to be reached by the vehicle;
- determining (34), from said parameters and from said reference position and speed, a deceleration command to obtain a preselected ending position and speed of the vehicle.

**2.** The method according to claim 1, wherein it comprises the iterative execution of a succession of at least some of the steps mentioned above.

**3.** The method according to claim 2, wherein at least some of the values of the reference position of the vehicle, the reference speed of the vehicle, and the preselected deceleration value are updated interdependently in the course of a same iteration of the succession of at least some of the steps mentioned above.

**4.** The method according to claim 1, wherein the value of the reference position of the vehicle is determined in real time from the current speed of the vehicle and from the preselected deceleration value obtained.

**5.** The method according to one of claims 1 to 4, wherein the value of the reference speed is determined in real time from the current position of the vehicle and from the preselected deceleration value.

**6.** The method according to any one of claims 1 to 5, wherein it comprises a step (30) of updating the preselected deceleration value in the course of the same iteration, the updating step taking place between the step (28) of determining the reference position and the step (32) of determining the reference speed.

**7.** The method according to claims 1 to 6, wherein it comprises a step of determining the deviation between the current speed of the vehicle and the reference speed of the vehicle and/or a step of determining the deviation between the current position of the vehicle and the reference position of the vehicle.

8.  The method according to claims 6 and 7, wherein the preselected deceleration value is updated from the determination of the deviation between the current speed of the vehicle and the reference speed of the vehicle or of the deviation between the current position of the vehicle and the reference position of the vehicle.

9.  The method according to one of claims 1 to 8, wherein in the event of detection of an overshoot of the ending position by the vehicle, the method further comprises a step of changing the deceleration profile of the vehicle.

10. The method according to claim 9, wherein the deceleration profile is of "ramp-plateau" or "plateau-ramp" type.

11. The method according to one of claims 1 to 10, wherein it comprises an initial step of preselecting deceleration control parameters.

12. A device for controlling deceleration of a vehicle on the ground, wherein it comprises:

    - means (12) for obtaining a preselected deceleration value;
    - means (14) for obtaining current dynamic parameters representative of the current position of the vehicle and the current speed of the vehicle;
    - means (18) for determining, from said obtained parameters and from the preselected deceleration value, a reference position and speed of the vehicle, the reference position being a theoretical position to be reached by the vehicle;
    - means for determining, from said parameters and from said reference position and speed, a deceleration command to obtain a preselected ending position and speed of the vehicle.

13. The device according to claim 12, wherein it comprises means for obtaining an estimate of the position where the vehicle will reach the preselected ending speed.

14. An aircraft comprising at least one device according to either of claims 12 and 13.

Fig. 1

Fig. 2

Fig. 3

**EP 2 514 647 B1**

**RÉFÉRENCES CITÉES DANS LA DESCRIPTION**

**Documents brevets cités dans la description**

- US 2008154445 A
- US 2008030073 A